# EUROPÄISCHE PATENTSCHRIFT

(11) **EP 2 706 592 B1**
(45) Veröffentlichungstag und Bekanntmachung des Hinweises auf die Patenterteilung: **04.05.2016**
(21) Anmeldenummer: 12405094.9
(22) Anmeldetag: 11.09.2012
(51) Int. Cl.: H01M 2/18, H01M 10/04, H01M 10/42, H01M 10/0525, H01M 10/0585, H01M 2/02

(54) **Batterie mit präzis positioniertem Aufbau**
Battery with precisely positioned construction
Batterie avec structure à positionnement précis

(43) Veröffentlichungstag der Anmeldung: 12.03.2014
(60) Teilanmeldung: 16153639.6
(73) Patentinhaber: swissbatt AG, 9050 Appenzell Steinegg (CH)
(72) Erfinder: Inauen, Marcel, 9050 Appenzell (CH)
(74) Vertreter: Rüfenacht, Philipp Michael

(56) Entgegenhaltungen:
- EP-A1- 2 065 952
- US-A1- 2004 127 952
- US-A1- 2008 299 451
- US-A1- 2011 250 485
- US-B2- 7 901 808

## Beschreibung

### Technisches Gebiet

Die Erfindung betrifft Batterien mit präzis positioniertem Aufbau, sowie deren Verwendung und Herstellung. Insbesondere betrifft die Erfindung Batterien mit präzis positioniertem Anoden- und Kathodenmaterial im Stapelaufbau, deren Herstellung und Verwendung gemäss den Oberbegriffen der unabhängigen Ansprüche.

### Stand der Technik

Eine Batterie ist ein elektrochemischer Energiespeicher und ein Energiewandler. Bei der Entladung wird gespeicherte chemische Energie in elektrische Energie umgewandelt. Diese kann von einem vom Stromnetz unabhängigen elektrischen Endgerät genutzt werden. Eine besondere Herausforderung an die Grösse, Sicherheit und Leistungsfähigkeit einer Batterie stellt die elektrische Versorgung medizinischer Geräte dar, die teilweise oder ganz implantiert werden, wie zum Beispiel Herzschrittmacher, Hörgeräte, Insulinpumpen und Medikamentendispenser. Auch für Unterhaltungsgeräte des täglichen Gebrauchs werden stets kleinere Batterien mit unverminderter Leistung und Laufzeit nachgefragt.

Entscheldend für Batterien mit kompakten Bauformen ist, dass sie trotz der kompakten Bauform Sicherheit gegen Kurzschlüsse bieten, d.h. gegen die physische, spannungsentladende Verbindung zwischen den zwei Polen einer Zelle, und dennoch eine möglichst hohe Energiedichte auf kleinstem Raum aufweisen. In EP 1'100'139 A1 (WYON AG. Appenzell, CH) wird eine Batterie mit hoher Energiedichte des Lithium-Ionen-, respektive Lithium-Polymer-Typs beschrieben. Es wird eine gewickelte Batterie gezeigt, deren aktive Bandlänge von Kathode und Anode möglichst gross ist. Dazu wird ein stiftförmiger Ableiterbereich mit einer Wicklung des Ableiterbandes umschlossen.

In der US 2012/0100406 A1 (VARTA MICROBATTERY GMBH, Ellwangen, DE) wird eine Knopfzelle mit gewundener Elektrode gezeigt. Solche Knopfzellen können zum Beispiel auf einer Zink/Mangan, Nickel/Cadmium oder Lithium-Ionen Elektrode basieren. Zwei Gehäusehälften aus Metall umschliessen dabei eine Anordnung aus einer positiven Elektrode, einer negativen Elektrode und einem dazwischen angeordneten Separator.

In der US 7'901'808 B2 (CARDIAC PACEMAKERS, INC., St. Paul, US-MN) wird eine Batterie im Stapelaufbau mit aufeinanderfolgenden Elektrodenschichten gezeigt. Zwei Separatorschichten je Elektrodenschicht umschliessen diese wie ein Sandwich. Der äussere Rand der Separatoren ist vollständig verschweisst bis auf einen Durchgang für die Ableitungen.

In der US 2004/0127952 A1 (CARDIAC PACEMAKERS, INC., ST. Paul, US-MN) sind Batterien für implantierbare medizinische Apparate wie Herzschrittmacher oder Defibrillatoren gezeigt. Diese Batterien sollen insbesondere den verfügbaren Raum des Gehäuses optimal nutzen und eine verbesserte Packungseffizienz aufweisen, dazu weisen verschiedene Stacks innerhalb des Gehäuses unterschiedliche Flächenausdehnungen auf.

Allen diesen Batterien gemeinsam ist, dass sie den Herausforderungen der Miniaturisierung mit einem relativen Kapazitätsverlust zu kämpfen haben, um einen Kurzschluss zu verhindern. Insbesondere kann die Bildung von Dendriten an den seitlichen Enden der Elektroden die elektrische Trennung der Pole kompromittieren. In der Regel verhindern Separatoren, mit einem Elektrolyt getränkte poröse oder mikroporöse Membranen oder Schichten, einen Kontakt zwischen den gegensätzlichen Elektroden. Diese können aber durch Schläge, Stösse oder Bewegungen beschädigt oder verschoben werden, wodurch sie ihre Funktion nicht mehr, oder nur noch unzureichend erfüllen. Metallische Gehäusewände können dabei den Ionenfluss begünstigen und indirekt auch zur Dendritbildung beitragen und einen Kurzschluss zwischen der Kathode und der Anode oder zwischen dem Trägerband der Kathode und dem Gehäuse begünstigen. Um solchen Schwierigkeiten vorzubeugen, halten viele Batterien einen Sicherheitsabstand S zwischen einer Gehäusewand und einer Elektrode. In der Praxis wird dabei ein Sicherheitsabstand von mehr als 0.5 mm eingehalten. Weiterhin wird zur Positionierung der Kathode gegenüber der Anode zusätzlich ein weiterer Sicherheitsabstand T von mehr als 0.5 mm in der Flächenausdehnung einer Elektrodenschicht eingerechnet. In der Summe ergibt dies einen gesamten Verlust an potentiell aktiver Elektrodenfläche von 1 mm oder mehr im gesamten Umfang der Elektrodenschicht. Insbesondere für miniaturisierte, d.h. grössenkritische Batterien ist der durch diesen summierten Sicherheitsabstand T und S resultierende Kapazitätsverlust von grosser Bedeutung. Die Kathodenflächen und demzufolge die Kapazität werden gegenüber den gesamten Batteriedimensionen überproportional verkleinert.

### Darstellung der Erfindung

Es ist eine Aufgabe der vorliegenden Erfindung, eine dem eingangs genannten technischen Gebiet zugehörende Batterie zu schaffen, welche den Kapazitätsverlust durch die erforderlichen Sicherheitsabstände möglichst minimiert. Insbesondere soll eine effiziente, günstig herzustellende und vielseitig einsetzbare Batterie bereitgestellt werden. Außerdem wird ein besonders effizientes Herstellungsverfahren, sowie eine besonders effiziente Verwendung für eine erfindungsgemässe Batterie bereitgestellt.

Die Lösung der Aufgabe(n) ist durch die kennzeichnenden Merkmale der unabhängigen Ansprüche definiert.

Ein Aspekt der vorliegenden Erfindung betrifft eine Batterie, insbesondere eine Batterie im Stapelaufbau. Die erfindungsgemässe Batterie umfasst mindestens eine Schicht mit Anodenmaterial. Für jede mindestens eine Schicht mit Anodenmaterial umfasst die Batterie mindestens eine Schicht mit Kathodenmaterial. Zwischen jeder mindestens einen Schicht mit Anodenmaterial und jeder mindestens einen Schicht mit Kathodenmaterial liegt mindestens ein Separator als Trennschicht. Die erfindungsgemässe Batterie umfasst zudem ein Gehäuse mit einem Innenraum. Das Gehäuse ist so angeordnet, dass es die Schichten umgibt, respektive so, dass jede mindestens eine Schicht mit Anodenmaterial und jede mindestens eine Schicht mit Kathodenmaterial darin vollständig Platz findet. Das Gehäuse ist im Wesentlichen aus einem Material, das keine oder eine vernachlässigbare elektrische Leitfähigkeit besitzt. Vorzugsweise ist das Gehäuse aus einem Nichtleiter, bevorzugt aus Kunststoff.

In der besonderen Ausführungsform des Stapelaufbaus können die Schichten mit Anodenmaterial, respektive Kathodenmaterial und die Trennschichten nacheinander in einen Stapelaufbau geschichtet sein.

Als Anodenmaterial sei erfindungsgemäss Elektrodenmaterial zu verstehen, welches als Elektronenakzeptor fungiert, während als Kathodenmaterial erfindungsgemäss das Elektrodenmaterial zu verstehen sei, das als Elektronendonor fungiert. Dabei soll diese Definition bezüglich des Batteriebetriebs gelten und nicht eines allfälligen Wiederaufladeprozesses bei wiederaufladbaren Batterien, d.h. beim Entladevorgang der Batterie ist das Kathodenmaterial die positive Elektrode.

Im Sinne der vorliegenden Erfindung sei keine oder eine vernachlässigbare elektrische Leitfähigkeit als eine Leitfähigkeit von weniger als 10⁻⁶ S/m zu verstehen, insbesondere sei die Leitfähigkeit eines als Nichtleiter, oder eines als Isolatoren bekannten Stoffes oder Stoffgemisches zu verstehen. Insbesondere die meisten Nichtmetalle, sowie Kohlenwasserstoffverbindungen und viele organische Verbindungen gelten als solche Nichtleiter. In einer bevorzugten Ausführungsform ist keine oder eine vernachlässigbare elektrische Leitfähigkeit gemäss der vorliegenden Erfindung eine Leitfähigkeit von weniger als 10⁻⁸ S/m. Dementsprechend sei gemäss der vorliegenden Erfindung ein Nichtleiter ein Stoff, der keine oder eine praktisch unbedeutende elektrische Leitfähigkeit besitzt, vorzugsweise kleiner als 10⁻⁸ S/m.

Ein Separator erfüllt gemäss der vorliegenden Erfindung die Funktion einer räumlichen, d.h. insbesondere physischen, und elektrischen Trennschicht zwischen zwei Elektrodenschichten, einer Schicht mit Anodenmaterial und einer Schicht mit Kathodenmaterial. Dabei sollte ein Separator durchlässig für Ionen sein. In seiner einfachsten Ausführungsform umfasst der Separator ein poröses Material, welches in einer Elektrolytlösung getränkt ist. Geeignet sind unter anderem mikroporöse Kunststoffe, Vliese, Glasfaser, Polyethylen, etc.

Durch die erfindungsgemässe Lösung kann ein erster Sicherheitsabstand S zwischen Gehäuseinnenwand und einer Seitenkante der Elektrode und ein zweiter Sicherheitsabstand T zwischen der Seitenkante der Elektrode und der Seitenkante der Gegenelektrode geringer gewählt werden. Somit kann ein überproportional eintretender Kapazitätsverlust durch die Verkleinerung der Batterie verhindert werden. Insgesamt ist es möglich, eine in ihren Dimensionen effizientere Batterie zu erzeugen.

Die Form der Batterie kann eine Knopfform, eine Hufeisenform, ein Quader, etc. sein. Besonders bei gestapelten Batterien in Hufeisenform ist die Aussenkante der Elektrodenflächen besonders gross und ein entsprechend hoher Kapazitätsverlust resultiert durch die erforderlichen Sicherheitsabstände S und T. Eine Beschränkung der besagten Sicherheitsabstände ist für Batterien in Hufeisenform demnach besonders vorteilhaft.

In einer besonderen Ausführungsform umfasst die mindestens eine Schicht mit Kathodenmaterial eine auf einem metallischen Trägerband beschichtete Kathode und die mindestens eine Schicht mit Anodenmaterial eine auf einem metallischen Trägerband beschichtete Anode.

Erfindungsgemäß überragt der Separator die mindestens eine Schicht mit Kathodenmaterial flächenmässig. Dadurch bildet der die mindestens eine Schicht mit Kathodenmaterial flächenmässig überragende Teil des Separators mindestens ein Bord. Dieses Bord überragt mindestens eine Kante der mindestens einen Schicht mit Kathodenmaterial. Zweckmässig wird dabei eine schmale Kante einer im Wesentlichen flächigen Schicht überragt. Der Bord dieses Separators ist in dieser Ausführungsform mit einem weiteren Bord desselben Separators, oder einem weiteren Bord eines weiteren Separators über eine Mehrzahl von stoffschlüssigen Verbindungsstellen verbunden. Zum Beispiel kann in einem Sandwich-Aufbau eine erste Schicht mit Kathodenmaterial auf einem ersten Separator als Trennschicht aufliegen, welche die erste Schicht mit Kathodenmaterial flächenmässig überragt. Der Anteil des Separators, welcher die erste Schicht mit Kathodenmaterial flächenmässig überragt, bildet ein erstes Bord. Auf analoge Weise bildet ein zweiter Separator, welche auf der ersten Schicht mit Kathodenmaterial aufliegt, einen zweiten Bord durch den Anteil, um den der zweite Separator die erste Schicht mit Kathodenmaterial flächenmässig überragt. In diesem Beispiel wäre der erste Bord mit dem zweiten Bord über eine Mehrzahl von stoffschlüssigen Verbindungsstellen miteinander verbunden. Unter anderem lassen sich somit die Schichten besonders präzise positionieren. Die Sicherheit wird erhöht und eine bessere Kapazität kann erreicht werden, indem der Sicherheitsabstand T und S verkleinert werden kann.

In einer besonderen Ausführungsform sind die Mehrzahl von stoffschlüssigen Verbindungsstellen Schweisspunkte, insbesondere Schweissnähte.

In einer besonderen Ausführungsform ist nicht der gesamte Bord mit einem weiteren Bord stoffschlüssig verbunden, sondern lediglich eine Mehrzahl einzelner Verbindungspunkte, insbesondere Schweisspunkte.

In einer besonderen Ausführungsform wiederholt sich die Anordnung für jede weitere Schicht mit Kathodenmaterial, d.h. jede Schicht mit Kathodenmaterial wird von zwei über eine Mehrzahl von stoffschlüssigen Verbindungsstellen miteinander verbundenen Separatoren umschlossen. In einer weiteren besonderen Ausführungsform wird eine Schicht mit Kathodenmaterial von einem Separator umschlossen, der um eine schmale Kante der Schicht mit Kathodenmaterial derart gefaltet ist, dass er die umschliessende Schicht beidseitig um ein Bord überragt. Diese beiden Borde sind über eine Mehrzahl von stoffschlüssigen Verbindungsstellen miteinander verbunden.

In einer besonderen Ausführungsform hat der Separator auf einer Seite eine Ausnehmung, um einen Ableiter von der aktiven Elektrodenschicht durchführen zu können.

In einer besonderen Ausführungsform umfasst die Batterie mindestens zwei Schichten mit mindestens einem Separator als Trennschicht zwischen den beiden Schichten. Die mindestens zwei Schichten und der mindestens eine Separator als Trennschicht sind formschlüssig und so ausgestaltet, dass keine Scherbewegung zwischen den Schichten und/oder zwischen dem Separator und den Schichten möglich ist. Bevorzugt umfasst diese Ausführungsform mindestens zwei Separatoren je Schicht mit Kathodenmaterial. Die beiden Separatoren sind so stoffschlüssig über eine Mehrzahl an Verbindungsstellen miteinander verbunden, dass sie die Schicht mit Kathodenmaterial an Ort und Stelle fixieren, das heisst so dass keine Lateralbewegung der besagten Schicht möglich ist.

Erfindungsgemäß umfasst die erfindungsgemässe Batterie einen ersten Sicherheitsabstand S zwischen mindestens einer Wand des Gehäuses und der mindestens einen Schicht mit Anodenmaterial. Insbesondere umfasst die Batterie einen Sicherheitsabstand von weniger als 0.5mm, insbesondere von weniger als 0.2 mm. In einer weiteren besonderen Ausführungsform ist die mindestens eine Schicht mit Anodenmaterial mit mindestens einer Wand des Gehäuses formschlüssig ausgestaltet. Dies kann dadurch bewerkstelligt werden, dass zum Beispiel die Fläche der mindestens einen Schicht mit Anodenmaterial im Wesentlichen dem inneren Querschnitt des Gehäuses entspricht, so dass die Schicht mit Anodenmaterial passgenau in das Gehäuse eingepasst werden kann. Dadurch kann der Abstand zwischen einer Innenwand des Gehäuses und der Schicht mit Anodenmaterial weniger als 0.2 mm aufweisen. Bei einem rechteckigen inneren Gehäusequerschnitt kann die Schicht mit Anodenmaterial mit bis zu drei Innenwänden physischen Kontakt über ihre schmale Kante haben. Eine vierte Innenwand kann etwas weiter beabstandet sein, um ausreichend Raum für Ableiter zu schaffen. Alternativ kann der ausreichende Raum für Ableiter auch mittels einer Ausstülpung des Gehäuses oder mittels der Form der Schichten mit Anoden-, respektive Kathodenmaterial gewährleistet sein. Auch eine oben oder unten, d.h. in paralleler Verlängerung zu den Schichten angebrachte Ableiterausnehmung wäre denkbar. Ebenso könnte bei einem runden Innenquerschnitt des Gehäuses ein ausreichender Raum für die Ableiter über einen Aufsatz oder durch die Innengeometrie vorgesehen sein, während auf der übrigen Innenwand des Gehäuses die Schicht mit Anodenmaterial formschlüssig aufsitzen würde. Durch eine solche Ausgestaltung liesse sich weiter Kapazitätsverlust minimieren und die Batterie wäre insgesamt noch effizienter.

Erfindungsgemäß umfasst die Batterie einen zweiten Sicherheitsabstand T zwischen einer Aussenkante, das heisst einer schmalen Kante, einer mindestens einen Schicht mit Anodenmaterial und einer Aussenkante, das heisst einer schmalen Kante, einer mindestens einen Schicht mit Kathodenmaterial. Dieser Sicherheitsabstand ist etwa 0.2 mm, wobei er etwa eine Abweichung von +/- 25% umfassen kann.

In einer besonderen Ausführungsform weist der Separator, oder zwei übereinander geschichtete Separatoren, im Bereich des zweiten Sicherheitsabstands T eine Mehrzahl von Schweisspunkten auf, welche die mindestens eine Schicht mit Kathodenmaterial, welche sie umgeben, ortsfest fixieren. Somit ist ein Verrutschen der Schicht mit Kathodenmaterial nicht möglich und die Sicherheit der Batterie wird erhöht, das heisst, es kann nicht zu einem Kurzschluss durch laterales Verschieben der Schicht mit Kathodenmaterial kommen.

In einer besonderen Ausführungsform ist das Gehäuse aus mechanisch stabilem Material, insbesondere aus nichtleitendem, mechanisch stabilem Kunststoff.

Im Sinne der vorliegenden Erfindung sei als mechanisch stabiles Material solches Material zu verstehen, welches einem bestimmten Verformungsdruck standhält. Beispielsweise könnte das Material so gewählt sein, dass es einer Lateralverschiebung von Schichten mit Anodenmaterial standhält, insbesondere diese gänzlich unterbindet. In diesem Beispiel müsste eine Gehäusewand in der Lage sein, einem Verformungs- oder Verschiebungsdruck standzuhalten, sodass eine beispielsweise passgenau und formschlüssig anliegende Seitenkante einer Schicht mit Anodenmaterial nicht verschoben würde. So wäre zum Beispiel eine flexible kunststoffbeschichtete Metallfolie nicht geeignet. In einer alternativen Ausführungsform umfasst das Gehäuse einen Materialverbund, welcher mindestens ein mechanisch stabiles Material umfasst. Entscheidend ist, dass die Innenseite des Gehäuses keine oder eine vernachlässigbare Leitfähigkeit, d.h. im Wesentlichen ein Nichtleiter wäre. Denkbar wäre also ein metallisches Gehäuse mit einer Lackierung oder Beschichtung im Inneren, welche der Oberfläche die Eigenschaften eines Nichtleiters verleiht.

In einer besonderen Ausführungsform der vorliegenden Erfindung ist die mindestens eine Schicht mit Anodenmaterial mit ihren schmalen Aussenkanten bis auf einen Ableiterbereich formschlüssig im Gehäuse angeordnet, insbesondere ist die mindestens eine Trennschicht des Separators gleich gross wie die mindestens eine Schicht mit Anodenmaterial, das heisst die Schicht mit Anodenmaterial und der Separator haben bis auf den besagten Ableiterbereich im Wesentlichen die gleiche Flächenausdehnung.

In einer besonderen Ausführungsform der erfindungsgemässen Batterie bildet der mindestens eine Separator als Trennschicht an einem definierten Bereich der mindestens einen Schicht mit Kathodenmaterial einen Ableiterbereich. Dieser weist einen Bord auf, der grösser ist als der übrige Bord des Separators, d.h. er ragt flächenmässig weiter über die Fläche der Kathode als der übrige Bord des Separators. Dies kann zum Beispiel dadurch erreicht werden, dass die Fläche des Separators im Ableiterbereich partiell verlängert wird. Dies kann weiter vorteilhaft sein, indem auf eine weitere Isolationsfolie verzichtet werden kann. Dadurch lässt sich zum Beispiel der Platzbereich im Ableiterbereich reduzieren.

In einer besonderen Ausführungsform umfasst die mindestens eine Schicht mit Anodenmaterial eine auf einem ersten metallischen Trägerband beschichtete Anode und die mindestens eine Schicht mit Kathodenmaterial eine auf einem zweiten metallischen Trägerband beschichtete Kathode. Die erfindungsgemässe Batterie umfasst in dieser Ausführungsform weiter je mindestens einen Anodenableiter und einen Kathodenableiter, welche aus dem gleichen Material sind, wie das erste metallische Trägerband, und/oder das zweite metallische Trägerband. Durch diesen Aufbau können zum Beispiel chemische Nebenreaktionen verhindert werden.

In einer besonderen Ausführungsform ist das Gehäuse so ausgestaltet, dass es den Innenraum im Wesentlichen gas- und wasserdicht von der Umwelt abschliesst. Im Wesentlichen gasdicht ist erfindungsgemäss so zu verstehen, als dass Gasdiffusion, insbesondere Wasserdampfdiffusion, nicht stattfindet oder vernachlässigbar ist.

In einer besonderen Ausführungsform ist die Batterie eine Lithium-Ionen-Batterie.

Ein weiterer Aspekt der vorliegenden Erfindung betrifft ein Verfahren zur Herstellung der erfindungemässen Batterie. Das Verfahren umfasst die folgenden Schritte:
a) Bereitstellen eines Gehäuses mit einem mechanisch stabilen Innenraum, wobei das Gehäuse im Wesentlichen aus einem Material ist, das keine oder eine vernachlässigbare elektrische Leitfähigkeit besitzt, vorzugsweise aus einem Nichtleiter, vorzugsweise aus Kunststoff;
b) Einpassen mindestens einer Schicht mit Anodenmaterial, wobei diese vorzugsweise passgenau eingepasst wird, d.h. dergestalt, dass eine Seitenkante des Anodenmaterials formschlüssig mit einer Innenwand des Gehäuses ist;
c) Einpassen eines ersten Separators als Trennschicht;
d) Auflegen einer Schicht mit Kathodenmaterial, welche flächenmässig kleiner ist als der Separator und darauf Auflegen eines weiteren Separators und anschliessend stoffschlüssig Verbinden, vorzugsweise Verschweissen, des weiteren Separators mit dem ersten Separator an einer Mehrzahl von Stellen, welche die Schicht mit Kathodenmaterial flächenmässig überragen. Die Schritte b) bis d) können bei Bedarf wiederholt werden, bis die gewünschte Anzahl an Elektroden im Gehäuse sind und das Gehäuse kann anschliessend verschlossen, vorzugsweise gasdicht verschlossen werden.

In einer besonderen Ausführungsform umfasst das stoffschlüssige Verbinden, vorzugsweise Verschweissen, ein Ultraschall-Schweissen, Laser-Schweissen, Plasma-Schweissen und/oder thermisches Schweissen.

In einer besonderen Ausführungsform umfasst das Verschliessen, vorzugsweise gasdicht verschliessen, ein Schweissen.

Ein weiterer Aspekt der vorliegenden Erfindung betrifft eine Verwendung der erfindungsgemässen Batterie. Die erfindungsgemässe Batterie wird für medizinische Apparate, insbesondere als Batterie für Diagnosegeräte und/oder implantierbare Pumpen, insbesondere zum Betreiben einer implantierbaren Pumpe verwendet.

Alle zur erfindungsgemässen Batterie, dem Verfahren zur Herstellung und der Verwendung derselben genannten Ausführungsformen können, sofern nicht ausdrücklich als Alternativen verstanden oder sich gegenseitig ausschliessend, selbstverständlich in beliebiger Kombination in der Ausgestaltung einer erfindungsgemässen Batterie, eines Verfahrens zu deren Herstellung und/oder einer erfindungsgemässen Verwendung verwirklicht sein.

Mit der vorliegenden Erfindung gelingt es trotz kleiner Bauformen, Batterien mit hoher Energiedichte, aber hoher Sicherheit gegen interne Kurzschlüsse und Dendritbildung bereitzustellen, welche vor allem in medizinischen Anwendungen und Apparaten besonders effizient einsetzbar sind.

Aus der nachfolgenden Detailbeschreibung und der Gesamtheit der Patentansprüche ergeben sich weitere vorteilhafte Ausführungsformen und Merkmalskombinationen der Erfindung. Die Erfindung wird im folgenden anhand von Figuren und konkreten Ausführungsbeispielen näher erläutert, ohne allerdings durch diese eingeschränkt zu sein.

### Kurze Beschreibung der Zeichnungen

Die zur Erläuterung des Ausführungsbeispiels verwendeten Zeichnungen zeigen:
- Fig. 1: zeigt schematisch einen Querschnitt durch eine Batterie des Stands der Technik;
- Fig. 2: zeigt schematisch an einem Teilquerschnitt eine Dendritbildung;
- Fig. 3: zeigt schematisch eine Schnittsansicht einer erfindungsgemässen Batterie;
- Fig. 4: zeigt schematisch eine weitere Schnittsansicht einer erfindungsgemässen Batterie;
- Fig. 5: zeigt schematisch einen Querschnitt in der Ebene A-A der Fig. 3;
- Fig. 6: zeigt schematisch einen Querschnitt in der Ebene B-B der Fig. 4; und
- Fig. 7: zeigt schematisch eine erfindungsgemässe Batterie in einer hufeisenförmigen Ausführungsform im Aufschnitt.

Grundsätzlich sind in den Figuren, sofern nicht anders definiert, die gleichen Teile mit den gleichen Bezugszeichen versehen.

### Wege zur Ausführung der Erfindung

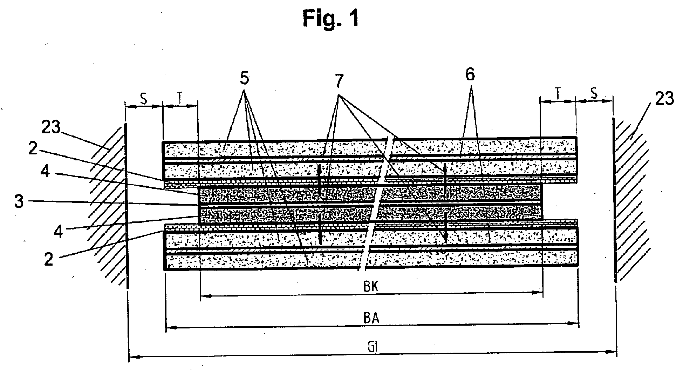

In Fig. 1 ist schematisch ein Querschnitt durch eine Batterie im Stapelaufbau, wie sie aus dem Stand der Technik bekannt ist, gezeigt. Die Batterie verfügt über eine Vielzahl von Schichten 2, 3, 4, 5, 6, 7 innerhalb eines Gehäuses 23 aus leitendem Metall. Die Schichten 2, 3, 4, 5, 6, 7 sind in einem Sandwich-Aufbau gehalten. Von innen nach aussen umfasst die Batterie die folgenden Schichten: Eine beidseitig mit aktivem Kathodenmaterial 4, z.B. Lithium-Cobalt(III)-oxid, beschichtete Metallfolie der Kathode 3 bildet die erste Elektrode von der im Ladevorgang die Ionenwanderung 7 zum aktiven Anodenmaterial 5, z.B. Graphit, verläuft. Das aktive Anodenmaterial 5 ist auf einer beschichteten Metallfolie der Anode 6. Die beiden aktiven Elektroden, d.h. die Schichten mit aktivem Kathodenmaterial 4 und die Schichten mit aktivem Anodenmaterial 5, sind durch einen Separator 2 aus ionenleitendem Polyethylen (PE) voneinander getrennt. Geeignete Werkstoffe sind dem Fachmann bekannt. Um einen inneren Kurzschluss zu verhindern, wird in der Praxis ein Sicherheitsabstand S von mindestens 0.5 mm zwischen der äusseren Kante der Schicht mit aktivem Anodenmaterial 5 und der Innenwand des Gehäuses 23 ausgespart. Anders ausgedrückt, ist die Breite des Anodenbandes BA insgesamt mindestens 1 mm kleiner als die innere Gehäusebreite Gl es zulassen würde. Ebenso muss für die richtige Positionierung und zur Verhinderung eines internen Kurzschlusses der Schicht mit dem aktivem Kathodenmaterial 4 gegenüber der Aussenkante der Schicht mit aktivem Anodenmaterial ein weiterer Sicherheitsabstand T von ebenfalls mindestens 0.5 mm von der Aussenkante der Kathode zur Aussenkante der Anode eingehalten werden. Somit ist die Breite des Kathodenbandes BK insgesamt mindestens 1 mm geringer als die Breite des Anodenbandes BA und wiederum mindestens 2 mm geringer als es die innere Gehäusebreite Gl zulassen würde.

Im Umfang verliert somit die Breite vom Anodenband BA mindestens 0.5 mm zur inneren Gehäusebreite Gl und die Breite vom Kathodenband 0.5 mm zur Breite vom Anodenband BA. Dies hat einen Kapazitätsverlust zur Folge. Besonders gravierend ist dieser bei Batterienformen, deren aktive Elektrodenschichten einen relativ grossen Umfang aufweisen, wie zum Beispiel hufeisenförmige Batterien oder besonders kleinen Batterien.

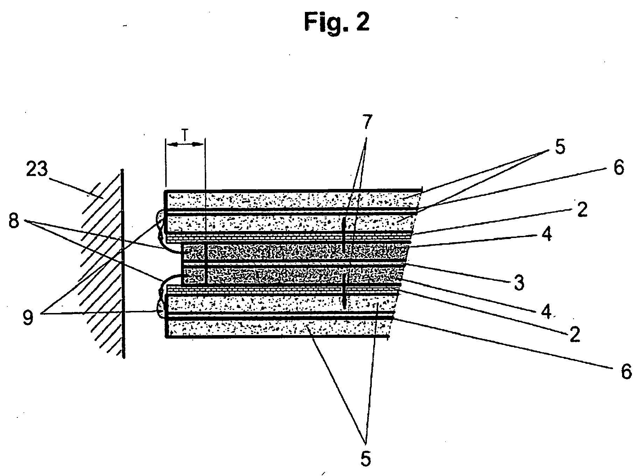

In Fig. 2 ist das Problem der Dendritbildung 9 an einer Batterie wie in Fig. 1 beschrieben gezeigt. Der Sandwich-artige Aufbau hat zwei Schichten mit aktivem Kathodenmaterial 4 auf einer Metallfolie der in der Mitte angeordneten Kathode 3. Die zwei Schichten mit aktivem Kathodenmaterial 4 werden jeweils mittels je eines Separators 2 als Trennschicht von je einer Schicht mit aktivem Anodenmaterial 5 physisch getrennt gehalten. Die Schichten mit aktivem Anodenmaterial 5 sind auf eine Metallfolie der Anode geschichtet. Die Ionenwanderung beim Ladevorgang 7 findet von den Schichten mit aktivem Kathodenmaterial 4 zu den Schichten mit aktivem Anodenmaterial 5 statt. Der Separator 2 ist porös und elektrisch neutral und kann von den Ionen ungehindert passiert werden. Beim Ladevorgang findet aber auch eine unerwünschte Ionenwanderung 8 an der Peripherie der Schichten mit aktivem Kathodenmaterial 4 zur Peripherie der Schichten mit aktivem Anodenmaterial 5 statt. Besonders diese Peripherie ist anfällig für die Dendritbildung 8, zum Beispiel ausgehend von der Metallfolie der Anode 6. Zur Verhinderung eines seitlichen Kurzschlusses beim Ladevorgang durch Dentritbildung 8 zwischen Anode und Metallfolie der Kathode 3 oder durch Berührung von Anode und Kathode (z. B. verschobener Separator 2), wird rund um die mit aktivem Material beschichtete Kathode 3 ein seitlicher Sicherheitsabstand eingehalten. Dieser setzt sich zusammen aus der geforderten seitlichen Distanz S zwischen metallischer Schnittkante der Kathode 3 zum aktiven Anodenmaterial 5 und den prozessbedingten Toleranzen und der im Gebrauch möglichen Verschiebung von Kathode resp. Separatoren T1 und T2 zusammen.

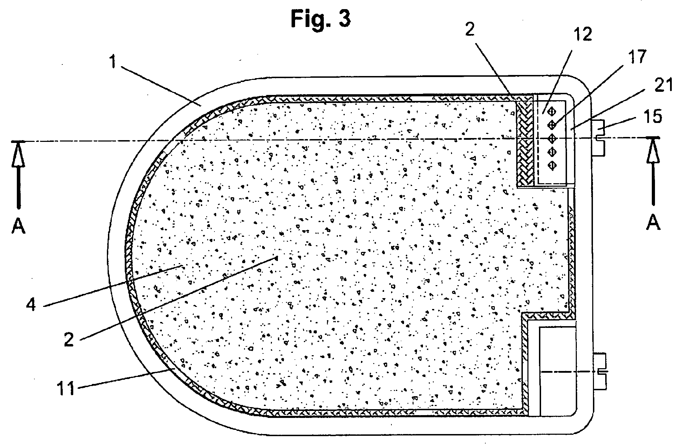

Die in Fig. 3 gezeigte schematische Ausführungsform der vorliegenden Erfindung zeigt ein Gehäuse 1 aus gasdichtem, nichtleitendem Kunststoff, als erfindungsgemäss geeignet hat sich zum Beispiel der Kunststoff LCP erwiesen, welches einen Innenraum umschliesst, der die Elektrodenschichten aufnimmt. Die Batterie weist einen Pluskontakt 15 auf. Der Separator 2 überragt das aktive Kathodenmaterial 4 flächenmässig, so dass sich ein Bord bildet. Der Bord des Separators 2 ist über Schweisspunkte 11 mit einem darüberliegenden Separator 2 (nicht gezeigt in der Aufsicht der Fig. 3) an einer Mehrzahl von Stellen stoffschlüssig verbunden. Im vorliegenden Ausführungsbeispiel sind sechs solcher Schweisspunkte 11 gezeigt. Je nach Form und Ausgestaltung der Batterie kann auch eine andere Anzahl Schweisspunkte 11 ausreichen, um die Schicht mit dem aktiven Kathodenmaterial 4 präzis zu positionieren. In einem nicht beschichteten Teil der Kathode befindet sich die Schweisszone 12 zum Ableiter. In der vorliegenden Fig. 3 sind die Schweisspunkte der Kathode, d.h. die +Ableiter 17 gezeigt. Der Ableiter der Kathode 21 besteht im vorliegenden Beispiel aus dem gleichen Material wie die Metallfolie 3 der Kathode (nicht gezeigt in Fig. 3), nämlich aus einer Aluminiumverbindung.

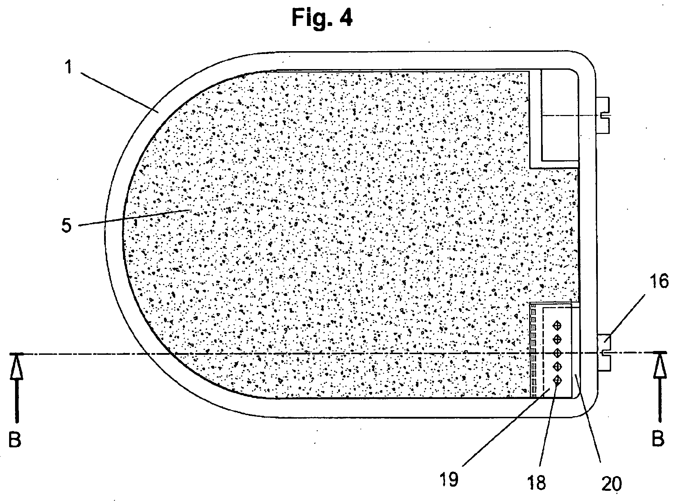

In der Fig. 4 wird im Ausführungsbeispiel der Fig. 3 im übertragenen Sinne im Sandwich-Aufbau ein Stockwerk nach oben oder nach unten gegangen. Gezeigt wird eine Schnittebene in Aufsicht durch eine Schicht mit aktivem Anodenmaterial 5. Ebenfalls gezeigt ist das Gehäuse 1 und ein Minuskontakt 16. Der Minuskontakt 16 verbindet zum Inneren des Gehäuses 1 mit dem nicht beschichteten Teil 19 der Anode. Dabei hat der Ableiter der Anode 20 das gleiche Material wie die Metallfolie der Anode 6. Am Minuskontakt 16, innerhalb des Gehäuses 1 befinden sich auch die Schweisspunkte der Anode, d.h. die -Ableiter 18. Besonders gut ist an Fig. 4 die Formschlüssigkeit der Schicht mit aktivem Anodenmaterial 5 mit der Innenwand des Gehäuses 1 erkennbar. Somit wird der zur Verfügung stehende Innenraum optimal ausgenutzt.

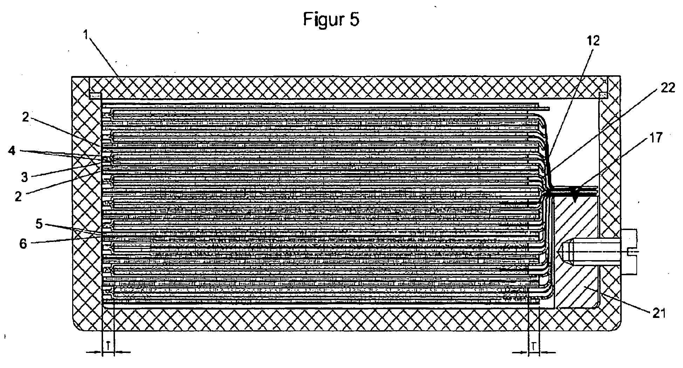

Die Fig. 5 illustriert den Sandwich-Aufbau eines stapelförmigen Batterieaufbaus einer Ausführungsform der vorliegenden Erfindung. Zudem zeigt Fig. 5 einen Querschnitt in der Schnittebene A-A im Bereich des Kathoden-Ableiters 21 der Fig. 3. Die Batterie umfasst ein mehrteiliges Gehäuse 1 aus einem Aufnahmekörper, welcher einen Innenraum definiert in dem die Schichten im Stapelaufbau aufgenommen werden können, und einen Deckel. Der Deckel verschliesst die Batterie gasdicht gegen die Aussenatmosphäre, verhindert den Austritt von Elektrolytdämpfen und kann verklebt, verschweisst, verklemmt oder anderweitig befestigt sein. Der Deckel kann von einer beliebigen Kante des Gehäuses gebildet werden. Das Gehäuse besteht aus einem nichtleitenden, stabilen Material, wie zum Beispiel das flüssigkristalline Polymer. Die Schichten umfassen alternierend aktives Anodenmaterial 5 auf einer Metallfolie der Anode 6, Separatoren 2 und dazwischen jeweils zwei Schichten mit aktivem Kathodenmaterial 4 auf einer Metallfolie der Kathode 3. Die Separatoren sind punktuell verschweisst (nur angedeutet) und positionieren und halten so die Kathode 3 und die Schichten mit Kathodenmaterial 4 an Ort und Stelle. In Fig. 5 kann man gut erkennen, wie die Separatoren 2 im Ableiterbereich (rechts) verlängert sind. Dadurch fungiert der Separator in diesem Bereich als Isolator 22. Die Schweisszonen zum Ableiter im nicht beschichteten Teil 12 werden gebündelt und mit dem Ableiter der Kathode 21 verschweisst 17. Ebenfalls ersichtlich ist, dass die Schicht mit dem Anodenmaterial 5 einen Abstand von weniger als 0.5mm zur Innenwand des Gehäuses 1 aufweist. Im vorliegenden Fall ist die Schicht mit dem Anodenmaterial 5 passgenau ausgestaltet, so dass die Schnittkante, respektive Aussenkante der Schicht mit dem Anodenmaterial formschlüssig an die Innenwand des Gehäuses 1 anschliesst. Durch diese Passgenauigkeit kann der Sicherheitsabstand S reduziert oder ganz weggelassen werden. Der Sicherheitsabstand T ist ebenfalls reduziert worden. Dies wird durch die präzise Positionierung der Schicht mit dem Kathodenmaterial 4 ermöglicht. Ein nachträgliches Verrücken der Schicht ist ebenfalls unterbunden durch das Anbringen der Mehrzahl an Schweisspunkten (in Fig. 5 nicht explizit gezeigt).

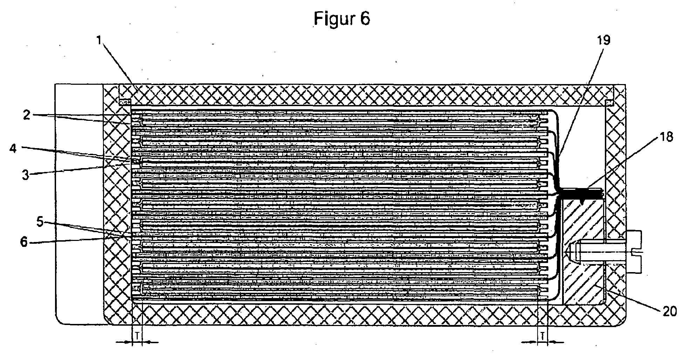

In Fig. 6 wird ein stapelförmiger Batterieaufbau einer Ausführungsform der vorliegenden Erfindung illustriert. Zudem zeigt Fig. 6 einen Querschnitt in der Schnittebene B-B im Bereich des Anoden-Ableiters 20 der Fig. 4. Analog zur Fig. 5 umfassen die Schichten alternierend aktives Anodenmaterial 5 auf einer Metallfolie der Anode 6, Separatoren 2 und dazwischen jeweils zwei Schichten mit aktivem Kathodenmaterial 4 auf einer Metallfolie der Kathode 3. Die Separatoren sind punktuell verschweisst (nur angedeutet) und positionieren und halten so die Kathode 3 und die Schichten mit Kathodenmaterial 4 an Ort und Stelle. In Fig. 6 werden die Anodenableiter 19 gezeigt, welche gebündelt und am Schweisspunkt 18 mit dem Anleiter der Anode 20 verschweisst sind.

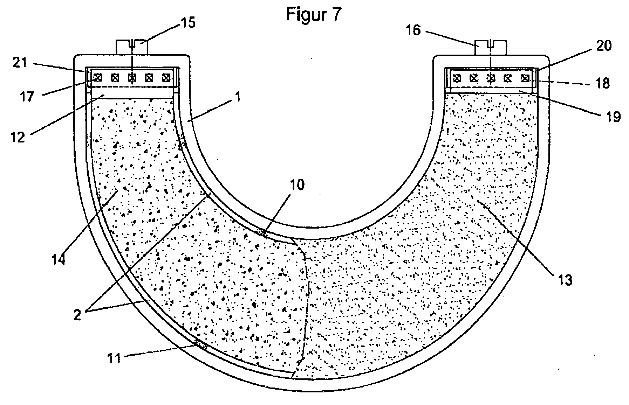

Fig. 7 zeigt schematisch eine besondere Ausführungsform in der die Batterie eine hufeisenförmige Form aufweist. Die Darstellung ist in Aufsicht und aufgeschnitten gezeigt. Eine Schicht 13 ist zur verbesserten Illustration teilweise weggelassen worden.

Die Batterie hat ein Gehäuse 1, welches einen Innenraum hufeisenförmig umschliesst. Das Gehäuse besteht aus einem nichtleitenden Kunststoff. Das Gehäuse kann mehrteilig aufgebaut sein und verschnappt, verschweisst oder verklebt werden. Es ist auch möglich, das Gehäuse aus einem Verbund zu fertigen, bei dem eine stabile Aussenhülle mit einem nichtleitenden Kunststoff ausgekleidet wird.

Das Gehäuse 1 umschliesst eine Reihe von Elektroden im Stapelaufbau. In Fig. 7 werden schematisch die Anode 13 und die Kathode 14 gezeigt. Die Kathode 14 befindet sich zwischen zwei Separatoren 2, welche die Kathode 14 flächenmässig überragen, so dass sie einen Separatorbord bilden. An einer Mehrzahl von Schweisspunkten an der Aussenseite 11 und Schweisspunkten an der Innenseite 10 werden die beiden Separatoren verschweisst. Der nicht beschichtete Teil der Kathode 12 mündet in den Ableiterbereich 21. Die Ableiter 17 werden gebündelt und verschweisst. Im Ableiterbereich der Kathode 21 ist auch der Pluskontakt 15 der Batterie. Der nicht beschichtete Teil der Anode 19 mündet in den Anoden-Ableiterbereich 20. Die Anoden-Ableiter 18 werden gebündelt und verschweisst. Im Ableiterbereich der Anode 20 ist auch der Minuskontakt 16 der Batterie.

Eine erfindungemässe Batterie kann benutzt werden, um zum Beispiel ein Implantat, wie eine medizinischen Pumpe mit Strom zu versorgen. Alternativ kann auch ein Hörgerät eine erfindungsgemässe Batterie aufnehmen. Eine erfindungsgemässe Batterie kann auch bei retinalen Implantaten verwendet werden. Zum Beispiel kann die Batterie wie bei Cochleaimplantaten operativ an der retroaurikulären Region am Knochen fixiert zur Versorgung des Implantats verwendet werden.

Medizinische Apparate, welche mit einer erfindungsgemässen Batterie betrieben werden können, sind zum Beispiel in US 8'202'248 B2 (Burnett, R.D., et al.) oder US 7'909'790 B2 (Burnett, D.R.) gezeigt.

## Patentansprüche

1. Batterie, insbesondere Batterie im Stapelaufbau, umfassend
a) mindestens eine Schicht mit Anodenmaterial (5);
b) für jede mindestens eine Schicht mit Anodenmaterial (5) mindestens eine Schicht mit Kathodenmaterial (4), und
c) zwischen jeder mindestens einen Schicht mit Anodenmaterial (5) und mindestens einen Schicht mit Kathodenmaterial (4) mindestens einen Separator (2) als Trennschicht,
d) ein Gehäuse (1) mit einem Innenraum, wobei das Gehäuse die Schichten umgibt, und wobei das Gehäuse (1) im Wesentlichen aus einem Material besteht, das keine oder eine elektrische Leitfähigkeit von weniger als 10⁻⁶ S/m besitzt, vorzugsweise aus einem Nichtleiter, vorzugsweise aus Kunststoff;
e) einen ersten Sicherheitsabstand (S) zwischen mindestens einer Wand des Gehäuses (1) und der mindestens einen Schicht mit Anodenmaterial (5) oder die mindestens eine Schicht mit Anodenmaterial ist mit mindestens einer Wand des Gehäuses formschlüssig ausgestaltet;
f) einen zweiten Sicherheitsabstand (T) zwischen einer Aussenkante einer mindestens einen Schicht mit Anodenmaterial (5) und einer Aussenkante einer mindestens einen Schicht mit Kathodenmaterial (4), und wobei
g) der Separator (2) die mindestens eine Schicht mit Kathodenmaterial (4) flächenmässig überragt, so dass der Separator (2) mindestens ein Bord über mindestens einer Kante der mindestens einen Schicht mit Kathodenmaterial (4) bildet und der Bord des Separators (2) mit einem weiteren Bord des Separators (2), oder einem Bord eines weiteren Separators (2) über eine Mehrzahl von stoffschlüssigen Verbindungsstellen (10, 11) verbunden ist und
**dadurch gekennzeichnet, dass**
der erste Sicherheitsabstand (S) weniger als 0.5 mm und der besagte zweite Sicherheitsabstand (T) etwa 0.2 mm beträgt.

2. Batterie gemäss Anspruch 1, umfassend mindestens zwei Schichten (4, 5) mit mindestens einem Separator (2) als Trennschicht zwischen den beiden Schichten, wobei die mindestens zwei Schichten und der mindestens eine Separator als Trennschicht formschlüssig und so ausgestaltet sind, dass keine Scherbewegung zwischen den Schichten (4, 5) und/oder zwischen dem Separator (2) und den Schichten (4, 5) möglich ist.

3. Batterie gemäss einem der Ansprüche 1 bis 2, umfassend einen ersten Sicherheitsabstand (S) von weniger als 0.2 mm.

4. Batterie gemäss Anspruch 3, wobei die mindestens eine Schicht mit Anodenmaterial (5) mit mindestens einer Wand des Gehäuses (1) formschlüssig ausgestaltet ist.

5. Batterie gemäss Anspruch 1, wobei der Separator im Bereich des zweiten Sicherheitsabstands (T) eine Mehrzahl von Schweisspunkten aufweist, welche die mindestens eine Schicht mit Kathodenmaterial (4) ortsfest fixieren.

6. Batterie gemäss einem der Ansprüche 1 bis 5, wobei das Gehäuse (1) aus mechanisch stabilem Material ist, insbesondere aus nichtleitendem, mechanisch stabilem Kunststoff.

7. Batterie gemäss einem der Ansprüche 1 bis 6, wobei die mindestens eine Schicht mit Anodenmaterial (5) mit ihren schmalen Aussenkanten bis auf einen Ableiterbereich formschlüssig im Gehäuse angeordnet ist, insbesondere ist die mindestens eine Trennschicht des Separators (2) gleich gross wie die mindestens eine Schicht mit Anodenmaterial (5).

8. Batterie gemäss Anspruch 1, wobei der mindestens eine Separator (2) als Trennschicht an einem definierten Bereich der mindestens einen Schicht mit Kathodenmaterial (4) einen Ableiterbereich bildet und dieser einen definierten Bord aufweist, welcher den übrigen Bord (Y) des Separators (2) flächenmässig überragt.

9. Batterie gemäss einem der Ansprüche 1 bis 8, wobei die mindestens eine Schicht mit Anodenmaterial (5) eine auf einem ersten metallischen Trägerband (6) beschichtete Anode umfasst, und die mindestens eine Schicht mit Kathodenmaterial (4) eine auf einem zweiten metallischen Trägerband (3) beschichtete Kathode umfasst, und wobei die Batterie weiter je mindestens einen Anodenableiter (20) und einen Kathodenableiter (21) umfasst, welche aus dem gleichen Material sind wie das erste metallische Trägerband (6), und/oder das zweite metallische Trägerband (3).

10. Batterie gemäss einem der Ansprüche 1 bis 9, wobei das Gehäuse so ausgestaltet ist, dass es den Innenraum gas- und wasserdicht von der Umwelt abschliesst, insbesondere auch den Austritt von Elektrolytdämpfen verhindert.

11. Batterie gemäss einem der Ansprüche 1 bis 10, wobei das Gehäuse so ausgestaltet ist, dass es die mindestens eine Schicht mit dem Anodenmaterial (5) in ihrer flächigen Ausdehnung bis auf einen Bereich mit einem Anodenableiter formschlüssig mit den Gehäusewänden ausgestaltet ist.

12. Batterie gemäss einem der Ansprüche 1 bis 11, wobei die Batterie eine Lithium-Ionen-Batterie ist.

13. Verwendung der Batterie nach Anspruch 1 als Batterie für medizinische Apparate, insbesondere als Batterie für Hörgeräte, medizinische Pumpen oder retinale Implantate.

14. Verfahren zur Herstellung einer Batterie gemäss Anspruch 1, umfassend die folgenden Schritte:
a) Bereitstellen eines Gehäuses mit einem Innenraum, wobei das Gehäuse im Wesentlichen aus einem Material ist, das keine oder eine vernachlässigbare elektrische Leitfähigkeit besitzt, vorzugsweise aus einem Nichtleiter, vorzugsweise aus Kunststoff;
b) Einpassen mindestens einer Schicht mit Anodenmaterial in das Gehäuse, wobei diese vorzugsweise passgenau eingepasst wird;
c) Bereitstellen eines ersten Separators als Trennschicht;
d) Auflegen einer Schicht mit Kathodenmaterial auf den ersten Separator, welche flächenmässig kleiner ist als der erste Separator, und
e) Auflegen eines zweiten Separators und anschliessend stoffschlüssig Verbinden, vorzugsweise Verschweissen, des weiteren Separators mit dem ersten Separator
f) Einpassen der Schicht mit Kathodenmaterial in das Gehäuse, **dadurch gekennzeichnet, dass** die Schichten so eingepasst und aufgelegt werden, dass der Separator (2) die mindestens eine Schicht mit Kathodenmaterial (4) flächenmässig überragt, so dass der Separator (2) mindestens ein Bord über mindestens einer Kante der mindestens einen Schicht mit Kathodenmaterial (4) bildet und der Bord des Separators (2) mit einem weiteren Bord des Separators (2), oder einem Bord eines weiteren Separators (2) über eine Mehrzahl von stoffschlüssigen Verbindungsstellen (10, 11) verbunden ist und der erste Sicherheitsabstand (S) weniger als 0.5 mm und der besagte zweite Sicherheitsabstand (T) etwa 0.2 mm beträgt.

## Claims

1. Battery, in particular a battery of a stacked construction, comprising
a) at least one layer with anode material (5);
b) for each at least one layer with anode material (5), at least one layer with cathode material (4), and
c) between each at least one layer with anode material (5) and at least one layer with cathode material (4), at least one separator (2) as a separating layer,
d) a housing (1) with an interior space, the housing surrounding the layers, and the housing (1) consisting substantially of a material that has no electrical conductivity or an electrical conductivity of less than 10⁻⁶ S/m, preferably of a nonconductor, preferably of plastic;
e) a first safety distance (S) between at least one wall of the housing (1) and the at least one layer with anode material (5) or the at least one layer with anode material is designed as positively engaging with at least one wall of the housing;
f) a second safety distance (T) between an outer edge of an at least one layer with anode material (5) and an outer edge of an at least one layer with cathode material (4), and
g) the separator (2) protrudes in surface area beyond the at least one layer with cathode material (4), so that the separator (2) forms at least one overhang beyond at least one edge of the at least one layer with cathode material (4) and the overhang of the separator (2) is connected to a further overhang of the separator (2), or an overhang of a further separator (2), by way of a plurality of integral connecting locations (10, 11) and
**characterized in that**
the first safety distance (S) is less than 0.5 mm and said second safety distance (T) is approximately 0.2 mm.

2. Battery according to Claim 1, comprising at least two layers (4, 5) with at least one separator (2) as a separating layer between the two layers, the at least two layers and the at least one separator as a separating layer being positively engaging and designed such that no shearing movement is possible between the layers (4, 5) and/or between the separator (2) and the layers (4, 5).

3. Battery according to either of Claims 1 and 2, comprising a first safety distance (S) of less than 0.2 mm.

4. Battery according to Claim 3, at least one layer with anode material (5) being designed as positively engaging with at least one wall of the housing (1).

5. Battery according to Claim 1, the separator having in the region of the second safety distance (T) a plurality of welding points, which fix the at least one layer with cathode material (4) in place.

6. Battery according to one of Claims 1 to 5, the housing (1) being of mechanically stable material, in particular of nonconducting, mechanically stable plastic.

7. Battery according to one of Claims 1 to 6, the at least one layer with anode material (5) being arranged with its narrow outer edges positively engaging in the housing, apart from a discharge region; in particular, the at least one separating layer of the separator (2) being of the same size as the at least one layer with anode material (5).

8. Battery according to Claim 1, the at least one separator (2) as a separating layer forming a discharge region at a defined region of the at least one layer with cathode material (4) and this discharge region having a defined overhang, which protrudes in surface area beyond the remaining overhang (Y) of the separator (2).

9. Battery according to one of Claims 1 to 8, the at least one layer with anode material (5) comprising an anode coated on a first metallic carrier band (6), and the at least one layer with cathode material (4) comprising a cathode coated on a second metallic carrier band (3) and the battery further comprising at least one anode discharge tab (20) and at least one cathode discharge tab (21), which are of the same material as the first metallic carrier band (6) and/or the second metallic carrier band (3).

10. Battery according to one of Claims 1 to 9, the housing being designed such that it closes off the interior space from the environment in a gastight and watertight manner, in particular also prevents the escape of electrolyte vapors.

11. Battery according to one of Claims 1 to 10, the housing being designed such that it makes the at least one layer with the anode material (5) positively engage with the housing walls in its area extent, apart from a region with an anode discharge tab.

12. Battery according to one of Claims 1 to 11, the battery being a lithium-ion battery.

13. Use of the battery according to Claim 1 as a battery for medical apparatuses, in particular as a battery for hearing aids, medical pumps or retinal implants.

14. Method for producing a battery according to Claim 1, comprising the following steps:
a) providing a housing with an interior space, the housing being substantially of a material that has no, or negligible, electrical conductivity, preferably of a nonconductor, preferably of plastic;
b) fitting at least one layer with anode material into the housing, this layer preferably being fitted in exactly;
c) providing a first separator as a separating layer;
d) placing onto the first separator a layer with cathode material, which is smaller in surface area than the first separator, and
e) placing on a second separator and subsequently integrally connecting, preferably welding, the further separator to the first separator;
f) fitting the layer with cathode material into the housing, **characterized in that** the layers are fitted in and placed on in such a way that the separator (2) protrudes in surface area beyond the at least one layer with cathode material (4), so that the separator (2) forms at least one overhang beyond at least one edge of the at least one layer with cathode material (4) and the overhang of the separator (2) is connected to a further overhang of the separator (2), or an overhang of a further separator (2), by way of a plurality of integral connecting locations (10, 11) and the first safety distance (S) is less than 0.5 mm and said second safety distance (T) is approximately 0.2 mm.

## Revendications

1. Batterie, en particulier une batterie dans un empilage, comprenant :
a) au moins une couche avec un matériau d'anode (5) ;
b) pour chacune des au moins une couche avec un matériau d'anode (5), au moins une couche avec un matériau de cathode (4), et
c) entre chacune des au moins une couche avec un matériau d'anode (5) et au moins une couche avec un matériau de cathode (4), au moins un séparateur (2) en tant que couche de séparation,
d) un boîtier (1) avec un espace intérieur, le boîtier entourant les couches, et le boîtier (1) étant essentiellement constitué d'un matériau présentant une conductivité électrique nulle ou inférieure à 10⁻⁶ S/m, de préférence un matériau non-conducteur, de préférence une matière plastique;
e) un premier espacement de sécurité (S) entre au moins une paroi du boîtier (1) et l'au moins une couche avec un matériau d'anode (5), ou l'au moins une couche avec un matériau d'anode est conçue avec une forme complémentaire à celle d'au moins une paroi du boîtier;
f) un deuxième espacement de sécurité (T) entre un bord extérieur d'une au moins une couche avec un matériau d'anode (5) et un bord extérieur d'une au moins une couche avec un matériau de cathode (4), et dans laquelle
g) le séparateur (2) fait saillie surfaciquement au-delà de l'au moins une couche avec un matériau de cathode (4), de telle façon que le séparateur (2) forme au moins un rebord par-dessus l'au moins un bord de l'au moins une couche avec un matériau de cathode (4), et que le rebord du séparateur (2) est relié à un autre rebord du séparateur (2), ou à un rebord d'un autre séparateur (2), sur une pluralité de points d'assemblage (10, 11) avec adhérence de matière, et
**caractérisée en ce que**
le premier espacement de sécurité (S) est inférieur à 0,5 mm, et ledit deuxième espacement de sécurité (T) mesure environ 0,2 mm.

2. Batterie selon la revendication 1, comprenant au moins deux couches (4, 5) avec au moins un séparateur (2) en tant que couche de séparation entre les deux couches, les au moins deux couches et l'au moins un séparateur en tant que couche de séparation présentant des formes complémentaires et étant conçus de manière à empêcher un mouvement de cisaillement entre les couches (4, 5) et/ou entre le séparateur (2) et les couches (4, 5).

3. Batterie selon l'une des revendications 1 à 2, comprenant un premier espacement de sécurité (S) inférieur à 0,2 mm.

4. Batterie selon la revendication 3, dans laquelle l'au moins une couche avec un matériau d'anode (5) est conçue avec une forme complémentaire à celle d'au moins une paroi du boîtier (1).

5. Batterie selon la revendication 1, dans laquelle le séparateur présente une pluralité de points de soudure dans la région du deuxième espacement de sécurité (T), lesquels fixent de façon stationnaire l'au moins une couche avec un matériau de cathode (4).

6. Batterie selon l'une des revendications 1 à 5, dans laquelle le boîtier (1) est constitué d'un matériau mécaniquement stable, en particulier d'une matière plastique non-conductrice et mécaniquement stable.

7. Batterie selon l'une des revendications 1 à 6, dans laquelle l'au moins une couche avec un matériau d'anode (5) est agencée avec ses bords extérieurs étroits en complémentarité de forme dans le boîtier, hormis dans une région de dissipateur, l'au moins une couche de séparation du séparateur (2) étant en particulier de la même taille que l'au moins une couche avec un matériau d'anode (5).

8. Batterie selon la revendication 1, dans laquelle l'au moins un séparateur (2) en tant que couche de séparation forme une région de dissipateur dans une région définie de l'au moins une couche avec un matériau de cathode (4), et celui-ci présente un rebord défini faisant saillie surfaciquement au-delà de l'autre rebord (Y) du séparateur (2).

9. Batterie selon l'une des revendications 1 à 8, dans laquelle l'au moins une couche avec un matériau d'anode (5) comprend une anode appliquée sur une première bande de support métallique (6), et l'au moins une couche avec un matériau de cathode (4) comprend une cathode appliquée sur une deuxième bande de support métallique (3), et la batterie comprenant en outre respectivement au moins un dissipateur d'anode (20) et un dissipateur de cathode (21), lesquels sont constitués du même matériau que la première bande de support métallique (6) et/ou que la deuxième bande de support métallique (3).

10. Batterie selon l'une des revendications 1 à 9, dans laquelle le boîtier est conçu de manière à isoler l'espace intérieur de façon étanche au gaz et à l'eau par rapport à l'environnement, en empêchant en particulier également l'échappement de vapeurs d'électrolyte.

11. Batterie selon l'une des revendications 1 à 10, dans laquelle le boîtier est conçu de telle façon que l'au moins une couche avec le matériau d'anode (5) présente une forme complémentaire à celle des parois de boîtier dans son extension surfacique, hormis dans une région comprenant un dissipateur d'anode.

12. Batterie selon l'une des revendications 1 à 11, la batterie étant une batterie à ions lithium.

13. Utilisation de la batterie selon la revendication 1 en tant que batterie pour des appareils médicaux, en particulier en tant que batterie pour des appareils auditifs, des pompes médicales ou des implants rétiniens.

14. Procédé de fabrication d'une batterie selon la revendication 1, comprenant les étapes suivantes :
a) mise à disposition d'un boîtier avec un espace intérieur, le boîtier étant essentiellement constitué d'un matériau présentant une conductivité électrique nulle ou négligeable, de préférence un matériau non-conducteur, de préférence une matière plastique ;
b) insertion d'au moins une couche avec un matériau d'anode dans le boîtier, celle-ci étant de préférence insérée en ajustement précis ;
c) mise à disposition d'un premier séparateur en tant que couche de séparation ;
d) application d'une couche avec un matériau de cathode sur le premier séparateur, laquelle est surfaciquement plus petite que le premier séparateur, et
e) application d'un deuxième séparateur, puis liaison par adhérence de matière, de préférence par soudage, de l'autre séparateur avec le premier séparateur,
f) insertion de la couche avec un matériau de cathode dans le boîtier, **caractérisée en ce que** les couches sont insérées et appliquées de telle façon que le séparateur (2) fait saillie surfaciquement au-delà de l'au moins une couche avec un matériau de cathode (4), de sorte que le séparateur (2) forme au moins un rebord sur au moins un bord de l'au moins une couche avec un matériau de cathode (4), et le rebord du séparateur (2) est relié à un autre rebord du séparateur (2) ou à un rebord d'un autre séparateur (2) en une pluralité de points d'assemblage (10, 11) avec adhérence de matière, et le premier espacement de sécurité (S) étant inférieur à 0,5 mm et ledit deuxième espacement de sécurité (T) mesurant environ 0,2 mm.
